# EUROPEAN PATENT APPLICATION

(11) **EP 1 631 085 A1**
(43) Date of publication of application: **01.03.2006**
(21) Application number: 05018476.1
(22) Date of filing: 25.08.2005
(51) Int. Cl.: H04N 7/16, H04N 5/00

(54) **Broadcasting receiving apparatus, broadcasting receiving method, and broadcasting receiving system**

(30) Priority: 31.08.2004 JP 2004252713
(71) Applicant: KABUSHIKI KAISHA TOSHIBA, Tokyo 105-8001 (JP)
(72) Inventor: Ooi, Shinichi, Toshiba Corporation, Minato-ku Tokyo 105-8001 (JP)
(74) Representative: HOFFMANN EITLE

(57) **Abstract**

To provide a broadcasting receiving apparatus has a tuner section (11) which selects a broadcasting signal and demodulating it to output a demodulated signal, a processing section (13, 30) which decodes the demodulated signal and outputs an video audio signal, and a control section (14, 30-3) which controls the broadcasting receiving apparatus to detect a stop signal for each model of a broadcasting receiving apparatus included in the broadcasting signal selected by the tuner section, and upon determining that this stop signal corresponds to the broadcasting receiving apparatus, partially interrupts the processing of the tuner section or the processing section in accordance with the detection, and outputs a message signal indicating that a receiving function of this broadcasting receiving apparatus is stopped.

## Description

The present invention relates to a broadcasting receiving apparatus, and particularly to a broadcasting receiving apparatus, a broadcasting receiving method, and a broadcasting receiving system for temporarily stopping a receiving function for each model for copyright protection.

At present, as is well known, in pay-TV, it is general that a viewer can view programs by paying a charge by contracting subscriptions in various units, for example, channel units, program units, and time units. Therefore, a limited receiving system is operated, which enables a viewer to view programs by scrambling the contents to be broadcasted and descrambling only viewable units on the basis of subscriptions. According to this limited receiving system, an entitlement management message in accordance with the subscription conditions of the viewer for each broadcasting receiving apparatus placed at home is transmitted, and this entitlement management message (EMM) is individually set for each broadcasting receiving apparatus.

On the other hand, according to a charge-free-view, a system of viewing through non-scramble broadcasting has been adopted since analog broadcasting was started. However, in future, scramble broadcasting will be adopted even in the program that can be viewed without charge in order to protect a copyright of the contents for broadcasting and free scramble broadcasting has been already started. Further, in order to enhance the copyright protection, it is expected that the contents with a restriction of copy-at once (copy of the contents is allowed only once) become mainstream.

At the present day, as the receiving apparatus which receives a digital terrestrial broadcasting, a right management and protection system (RMP system) has been examined. In this system, it is assumed that a part or all of processing functions of the RMP system is incorporated in a receiving apparatus with its software mounted thereon (incorporated as a partial processing function of a so-called broadcasting receiving application) and this system is to be used also in a personal computer (PC)-based receiving apparatus. Generally, it is feared that the PC in which the viewer may easily change the data is hacked and a copyright protection function is disabled. For example, this hacking means that a patch to copy a broadcasting signal decoded in the PC ignoring the instruction of the copyright protection of the broadcasting signal (for example, copy only once) is adopted by a broadcasting receiving application or the like.

In a patent document 1 (Jpn. Pat. Appln. KOKAI Publication No. 2001-78154), as a technology against such hacking, the technology to improve a security of a content signal by transmitting the content signal with a plurality of copyright protection systems selectable and arbitrarily selecting this copyright protection system is disclosed.

However, the conventional technology disclosed in the patent document 1 involves a problem such that the condition that the copyright is infringed in a specific model of the broadcasting receiving apparatus cannot be solved for each specific model thereof even if the condition has been known at a broadcast station.

An object of the present invention is to provide a broadcasting receiving apparatus, a broadcasting receiving method, and a broadcasting receiving system, which can disable a receiving function for each model when a copyright of contents is infringed in a specific model of the broadcasting receiving apparatus.

One embodiment of the invention is a broadcasting receiving apparatus comprising: a tuner section which selects a broadcasting signal and demodulates it to output a demodulated signal; a processing section which decodes the demodulated signal and outputs an video audio signal; and a control section which controls the broadcasting receiving apparatus to detect a stop signal for each model of a broadcasting receiving apparatus included in the broadcasting signal selected by the tuner section, and upon determining that this stop signal corresponds to the broadcasting receiving apparatus, partially interrupts the processing of the tuner section or the processing section in accordance with the detection, and outputs a message signal indicating that a receiving function of this broadcasting receiving apparatus is stopped.

When a broadcast station knows that the content is leaked to a specific model of the broadcasting receiving apparatus in advance, by transmitting a broadcasting signal having a stop signal for each model of the broadcasting receiving apparatus included therein and detecting this stop signal, the above-described broadcasting receiving apparatus may temporarily stop (revoke) the receiving function if this stop signal designates the model of this broadcasting receiving apparatus.

Further, the broadcasting receiving apparatus may explain the condition to a user by displaying a message that the receiving function of the broadcasting receiving apparatus is stopped at present. In addition, it is also preferable that a function to recover the receiving function from the current revoke condition under a predetermined condition is added by installing the specific program data.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of a structure of a broadcasting receiving apparatus according to an embodiment of the present invention;
FIG. 2 is a block diagram showing an example of a structure of an RMP processing section of the broadcasting receiving apparatus according to the embodiment of the present invention;
FIG. 3 is a flow chart showing an example of the processing when the broadcasting receiving apparatus according to the embodiment of the present invention is revoked;
FIG. 4 is an explanatory view showing another example of a message screen when the broadcasting receiving apparatus according to the embodiment of the present invention is revoked;
FIG. 5 is an explanatory view showing another example of an operation screen when the broadcasting receiving apparatus according to the embodiment of the present invention is revoked;
FIG. 6 is a flow chart showing an example of the detailed processing when the broadcasting receiving apparatus according to the embodiment of the present invention is revoked;
FIG. 7 is an explanatory view showing another example of an operation screen when the broadcasting receiving apparatus according to the embodiment of the present invention is revoked; and
FIG. 8 is a flow chart showing another example of the detailed processing when the broadcasting receiving apparatus according to the embodiment of the present invention is revoked.

The embodiments according to the present invention will be described in detail with reference to the drawings.

### <A structure and a function of a broadcasting receiving apparatus according to the present invention>

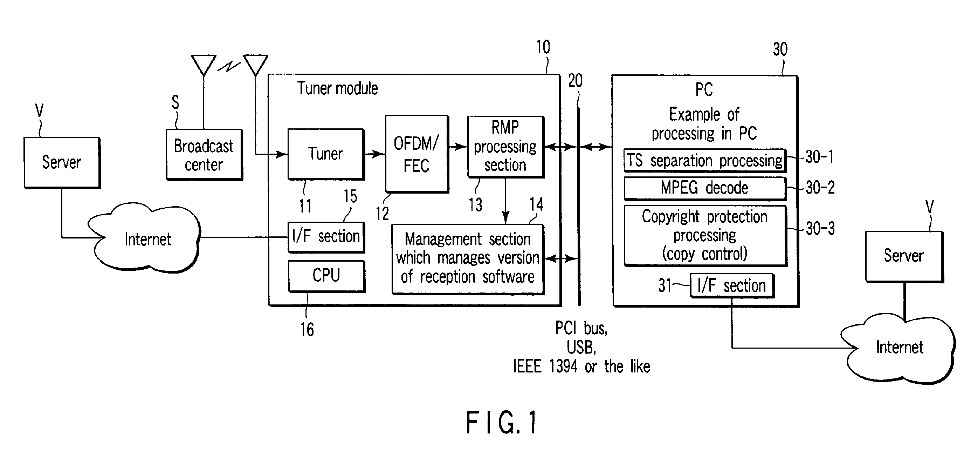

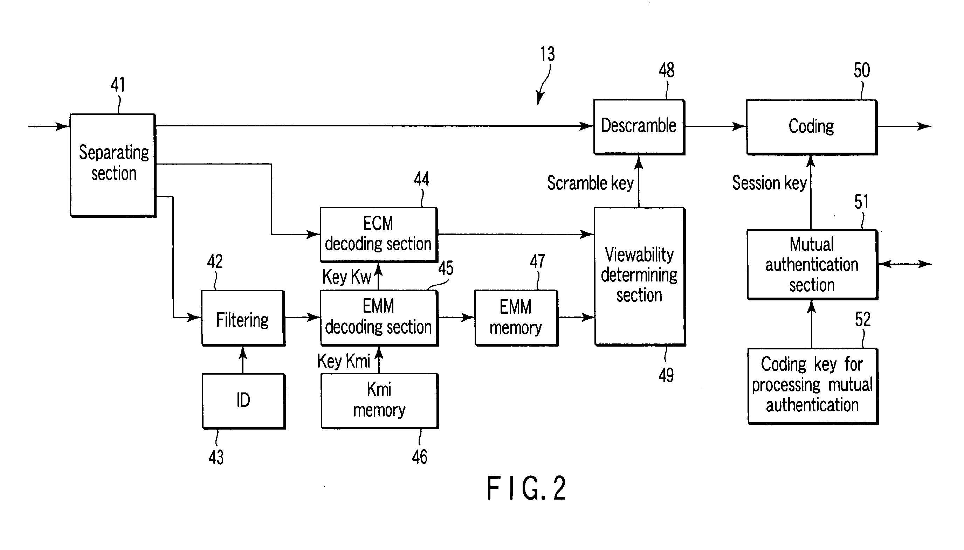

At first, the structure and the function of the broadcasting receiving apparatus according to the present invention will be described in detail with reference to the drawings. FIG. 1 is a block diagram showing an example of a structure of the broadcasting receiving apparatus according to an embodiment of the present invention, and FIG. 2 is a block diagram showing an example of a structure of an RMP processing section of the broadcasting receiving apparatus according to the embodiment of the present invention.

As an example, a broadcasting receiving apparatus according to the present invention is constructed by a tuner module section 10 and a PC section 30 in FIG. 1. In addition, the broadcasting receiving apparatus is shown as a broadcasting receiving system by adding a broadcast station S which transmits a broadcasting signal overlapped with a revoke signal to the tuner module section 10 and the PC section 30.

Here, the PC section 30 is a general personal computer and for example, it is composed of a central processing unit, a memory area, a storage area such as a hard disk, a display, and a power source or the like although general constituent elements are not illustrated. Further, in order to receive a reproduction signal from the tuner module 10 and reproduce a broadcasting signal on a screen in accordance with this in a program stored in these storage areas, the PC section 30 has a transport stream separation processing section 30-1, an MPEG decode section 30-2, and a copyright protection processing section 30-3, respectively. In addition, the PC section 30 has an I/F section 31 to transmit and receive a signal to and from an external server V through the Internet.

Further, the tuner module 10 has a tuner section 11, an OFDM/FEC section 12, which is a processing section for carrying out demodulation and correction of errors and in the embodiment, an OFDM is adopted as a modulation system, and a rights management protection (RMP) processing section 13, and a management section 14 which manages versions of a reception software (hereinafter, referred to as a management section 14).

A multipurpose interface 20 may connect the tuner module 10 and the PC section 30. As the multipurpose interface, for example, a PCI bus, a USB, and an IEEE 1394 may be available and further, it is also preferable that another multipurpose interface is added.

This tuner module 10 may be incorporated, for example, in a PC card, and it is preferable that the tuner module 10 is used when the tuner module 10 and the PC section 30 entirely function as a digital broadcasting receiving apparatus by inserting the tuner module section 10 having a card incorporated in the PC section 30, however, the present embodiment is not limited to this. In addition, as the broadcasting signal received by the tuner section, a digital terrestrial broadcasting signal, a BS broadcasting signal, and a CS broadcasting signal or the like are preferable, however, this broadcasting signal is not limited to these signals. Further, as the tuner module section 10, a board to be used inserted into an additional slot of the PCI bus of the PC section 30 and an adapter connected to the PC section 30 through the USB are also preferable.

The PC section 30 connected to the tuner module section 10 can decode the digital broadcasting signal inputted from the tuner module section 10, present it through a display and a speaker of the PC section 30, and output it to an external TV and a recording apparatus or the like through an output interface of the signal prepared in the PC section 30.

As the decode processing function of the digital broadcasting signal inputted from this tuner module section 10, as described in the above with reference to FIG. 1, the processing for demultiplexing (namely, separating) a transport stream (TS) of an MPEG 2, the processing for MPEG-decoding image and audio signals after the demultiplexing, and the processing for decoding a data broadcasting signal of the additional data are available as an example.

In addition, as the processing of the PC section 30, the navigation for selecting channels by taking out a program arrangement information (service information (SI), program specific information (PSI)) from the signal after demultiplexing to present a program list, a channel number and a channel name to a viewer is also necessary.

In addition, in the case of outputting a portion or all of the broadcasting signal or outputting the signal after decoding to the outside through a body of the PC section 30, the tuner module section 10, or an output interface prepared in a board to be used inserted into the adapter (not illustrated), the additional slot of the PC card, and the PCI bus or the like as the processing of the PC section 30, in accordance with the instruction of the copyright protection designated by the broadcasting signal (for example, copy only once), the PC section 30 may output the signal after applying an appropriate protection. This appropriate protection may be a copyright protection system (a so-called DTCP) in the case of outputting a digital signal of the IEEE 1394, and may be a system for prohibiting copy (a so-called macro vision) in the case of outputting an analog signal.

### RMP processing section 13

Next, an example of the RMP processing section 13 is shown in FIG. 2. The RMP processing section 13 is composed of a separating section 41 which separates EMM from the broadcasting signal, a filtering section 42 which separates EMM, an ID memory section 43 such as a nonvolatile memory, a decoding section 44 of entitled control message (ECM) to be used upon descrambling the broadcasting signal, an EMM decoding section 45, a Kmi memory 46, an EMM memory 47, a viewability determining section 49, a descramble section 48, a coding section 50, a mutual authentication section 51, and a coding key memory section 52 for the mutual authentication processing.

### Copyright protection processing by RMP processing section 13

From the EMM separated by the separating section 41, only the EMM for this receiving apparatus (the tuner module) is separated by the filtering section 42. For this separation, an ID given to this receiving apparatus (the tuner module) is used. This ID is different depending on, for example, a manufacturer of the receiving apparatus (the tuner module), a model, or a receiving apparatus (a tuner module), and it is stored in the ID memory section 43, which is the nonvolatile memory of the tuner module section 10, before shipment. Then, by using this ID, the EMM of this receiving apparatus (the tuner module) is only separated by the filtering section 42.

Next, the ECM inputted in the ECM decoding section 44 of the tuner module section 10 is decoded. A key used for this decoding is a key Kw transmitted as a part of the EMM information to be described later. The decoded ECM is supplied to the viewability determining section 49. In this ECM, a scramble key to be used for descrambling the broadcast contents (the video and the audio data or the like) and the information indicating a subscription condition are transmitted.

The information indicating the subscription condition is not only the information indicating whether or not the broadcasting is pay-TV or free-TV but also the information for comparing the broadcast with EMM (entitlement management message) to be described later and determining if the viewer can view this and the information indicating the subscription condition of the program in the case of the pay-TV.

The EMM inputted into the EMM decoding section 45 of the tuner module section 10 is also decoded. The key used for this decoding is stored in the Kmi memory 46 before shipment, and this key is different depending on, for example, a manufacturer of each receiving apparatus (the tuner module), a model, or a receiving apparatus (a tuner module).

The decoded EMM is stored in the nonvolatile EMM memory 47 to be supplied to the viewability determining section 49. In this EMM memory 47, the above-mentioned key Kw may be stored to be supplied to the ECM decoding section 44, however, in FIG. 2, it is assumed that the nonvolatile memory is placed in the EMM decoding section 45 in order to make a triple structure of the key easily viewable. This EMM is the information including the key Kw to decode the ECM and the viewing subscription condition of the program (the viewable programs, the viewable channels, and the viewing terms or the like) in the case of the pay-TV.

In the meantime, the work key Kw may be regularly updated by a cycle, for example, once a month in order to prevent deterioration of a security, and upon updating, a new work key is transmitted enclosed in the EMM to all of the receiving apparatuses (the receiving apparatuses of the subscribers in the case of the pay-TV) in advance. The broadcast station may update the work key counting on that almost all receiving apparatuses have received EMM including a new work key.

Then, the viewability determining section 49 of the tuner module 10 may compare the ECM obtained from the ECM decoding section 44 with the EMM stored in the EMM memory 47 to determine viewability. The summary of the processing in this case is as follows:

Namely, in the case of the pay-TV, as described above, the viewability determining section 49 determines whether or not the received program is viewable in accordance with the subscription conditions of the program transmitted in the EMM. Then, if the program can be viewed, the viewability determining section 49 may take out a scramble key in the ECM to output it.

However, if it is determined that there is no subscriptions in the subscription condition of the program transmitted in the EMM and there is no right to view this program, the viewability determining section 49 does not output the scramble key, but may output the information indicating that this program cannot be viewed from the tuner module section 10, and display an error, for example, using the display function of the PC section 30 so as to show the viewer that this program cannot be viewed.

On the other hand, in the case of a free TV, since there is no necessity to contract subscriptions for each viewer (each receiving apparatus), the scramble key can be taken out, except for the case that this receiving apparatus is revoked, so as to enable the viewer to view the program. Further, the revoke signal indicating that the receiving apparatus is revoked (or to be revoked) is supplied from the broadcast station by using the EMM as superimposed on the EMM signal to be stored in the EMM memory 47. Further, it is possible to determine that the receiving apparatus is revoked (or to be revoked) by the viewability determining section 49. It is assumed that this information indicating that the receiving apparatus is revoked (or to be revoked) is outputted to the management section 14.

Here, other than the method of revoking by superimposing the revoke signal on the EMM signal, there is a method of revoking by updating the work key Kw as follows: Namely, in the EMM signal included in the broadcasting signal transmitted from a broadcast station S, the work key Kw of the broadcasting receiving apparatus other than the ID signal of this broadcasting receiving apparatus is updated to supply the EMM signal without updating only the work key Kw of this broadcasting receiving apparatus. Thereby, when the work key Kw is updated, only the work key Kw of this broadcasting receiving apparatus is invalidated (becomes old), so that the revoke condition is realized by disabling only this broadcasting receiving apparatus.

Further, the RMP processing section 13 has the coding section 50, the mutual authentication section 51, and the coding key memory section 52 for the mutual authentication processing. These sections are necessary since the tuner module section 10 and the PC section 30 are connected by the multipurpose interface, for example, a PCI bus, and they serve to prevent the signal after descrambling from being taken out on the multipurpose interface or to prevent the instruction (copy only once or the like) signal for the copyright protection of the broadcasting signal from being altered.

Specifically, the mutual authentication is carried out between the mutual authentication section 51 and the PC section 30, and when no problem is found in the authentication result, a session key is shared between the mutual authentication section 51 and the side of the PC section 30 upon the mutual authentication. Then, the coding section 50 may code and output the signal after descrambling by using the shared session key to decode it at the side of the PC section 30. In other words, the side of the PC section 30 needs the functional blocks equal to the coding section 50, the mutual authentication section 51, and the coding key memory section 52, and further, it is necessary to share the coding key for the mutual authentication between the mutual authentication section 51 and the PC section 30 in advance. Therefore, for example, in the coding key memory section 52 for the mutual authentication within the tuner module section 10, the key data is written before shipment. Further, the key data is entered as the additional data of the TV receiving application of the PC section 30 bundled by this tuner module section 10 and the key data is stored in the PC section 30 upon installing the TV receiving application in the PC section 30.

### <First revoke processing>

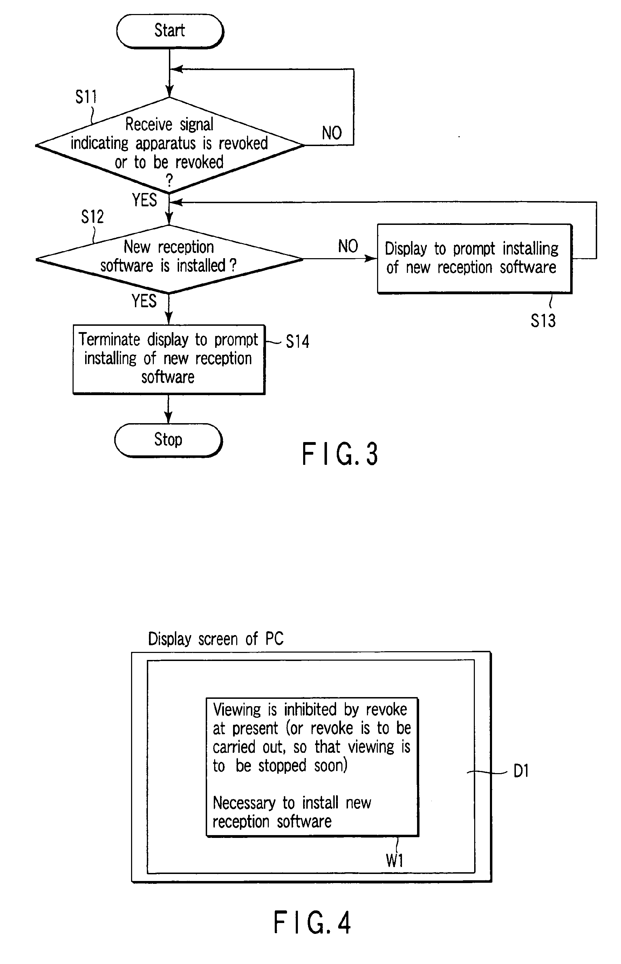

Next, with reference to the flow chart shown in FIG. 3, the revoke processing when the broadcasting receiving apparatus according to the present invention receives revoke from the broadcast station will be described in detail. The management section 14 manages installing of a new reception software when the receiving apparatus (tuner module) is revoked.

At first, the management section 14 of the tuner module 10 determines if the receiving apparatus (tuner module) is revoked or not (S11). Upon this determination, the revoke information to be given from the above-described RMP processing section 13 in FIG. 1 to the management section 14 is used. The revoke information is a signal to be outputted when the RMP processing section 13 determines that the receiving apparatus is revoked. If the RMP processing section 13 determines that the receiving apparatus is not revoked, the management section 14 may loop-process S11, however, if the RMP processing section 13 determines that the receiving apparatus is revoked, the management section 14 may determine if a new reception software is installed or not (S12).

In addition, when the management section 14 determines that the new reception software is not installed, it may proceed to S13, and when the management section 14 determines that the new reception software is installed, it may proceed to S14. Here, as described with reference to FIG. 1, as an example, the reception software (the program data) may carry out the processing for demultiplexing (separating) a transport stream (TS) of the MPEG2; the processing for MPEG-decoding the video and the audio signals after demultiplexing; the processing for decoding the data broadcasting signal as the additional data; the processing for navigating for selecting a channel; further, the processing for outputting a part or all of the broadcasting signal or the decoded broadcasting signal to the outside of the PC section 30 in accordance with the instruction (copy only once or the like) of the copyright protection designated by the broadcasting signal after applying the appropriate protection; and the mutual authentication and coding processing between the tuner module section 10 and the side of the PC section 30, however, the processing of the receiving software (the program data) is not limited to these.

In the receiving apparatus using the PC section 30, illegal extraction and alternation of a TV signal and freely copying it ignoring the instruction (copy at once or the like) of the copyright protection designated by the broadcasting signal due to alternating the reception software having these functions or applying patch are feared. When these illegal actions are found, the broadcast station S as a broadcast supplier may determine that this model of the receiving apparatus should be revoked and revoke it for each model. According to an example, the revoke signal included in the EMM signal included in the broadcasting signal is transmitted superimposed on the broadcasting signal. When a specific model of the broadcasting receiving apparatus is revoked, at least the channels viewing of which is inhibited by revoking cannot be viewed, and further, according to the present embodiment, in step S12, the management section 14 may prompt the user to the instruction of installing the reception software (the program data) for recovering the apparatus from the revoke condition (halt condition).

Here, as an example, it is preferable that the new software to be supplied and installed is improved so as to resolve the portions having a problem in the copyright protection causing revoke at the side of the broadcasting station. Accordingly, it is preferable for the specific model of the receiving apparatus to install the new reception software, whereby the program can be viewed with the copyright protected again, receiving the instruction to install the new software from the user after revoked by the broadcast station and applying improvement thereto.

Here, determination whether this new software is installed or not requires the following conditions, namely,
(1) The tuner module section 10 dose not mistake the old reception software that was installed to PC section 30 as new reception software; and
(2) If the tuner module section 10 connected to the side of the PC section 30, in which the new reception software is installed, is connected to the side of the PC section 30 again, in which the old reception software is installed, after recognizing installing of the new reception software, the tuner module section 10 does not receive the program being combined with the side of the PC section 30 in which the old reception software is installed.

In order to satisfy such conditions, the following methods may be available.

Namely, upon determination whether the new reception software is installed or not, the above-described mutual authentication processing between the tuner module section 10 and the side of the PC section 30 is used. In other words, it is assumed that a plurality of algorithms or the authentication keys to be used for the mutual authentication is incorporated in the tuner module section 10 before manufacturing and shipment, and for each version of the new reception software, the algorithm or the authentication key to be used for the mutual authentication processing is changed.

In other words, assuming that the apparatus is shipped with Ver1 installed upon manufacturing and shipment, it is expected that the PC section 30 has the algorithm or the authentication key to be used for the mutual authentication processing of Ver2 after the revoke occurs. In this case, if the PC section 30 does not know the algorithm or the authentication key to be used for the mutual authentication processing of Ver2, it is determined that the new reception software is not installed. On the other hand, since the tuner module section 10 storing the mutual authentication of Ver2 being used once does not carry out the authentication with the PC section 30 operating in the mutual authentication of Ver1, it can cope with the above-described problem (2). Hereinafter, it is decided that the tuner module section 10 may update the version for each occurrence of revoke.

Alternatively, it is preferable that the information indicating the version of the algorithm or the authentication key to be used for the present mutual authentication is entered in the EMM or the ECM of the broadcasting signal and the tuner module section 10 may refer to the newest version.

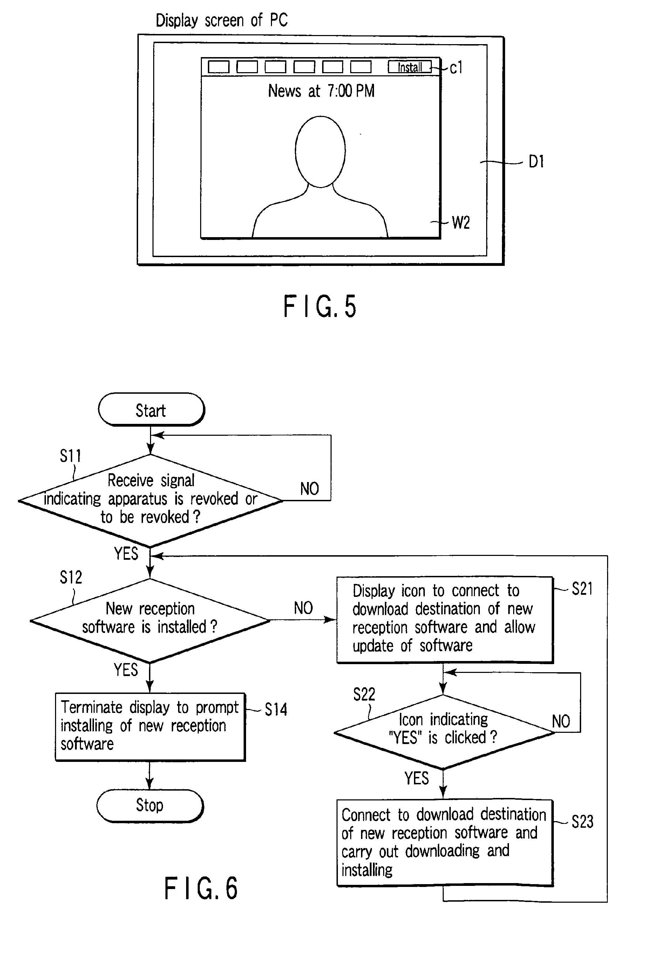

In step S12, when no new reception software is installed, the tuner module section 10 may instruct the PC section 30 to display a message to prompt installing of the new reception software (S13). Here, as shown in FIG. 4, in a display icon W1 of a personal computer screen D1, a display of a channel viewing of which is inhibited by revoke, for example, an on-screen display for displaying the message superimposed on the black-out TV display screen is preferable. Further, as shown in FIG. 5, it is preferable that an icon display cl to promote installing of the new reception software is carried out in a frame display W2 on the TV display screen of the personal computer screen D1. In other words, a method is not limited to these embodiments as long as the viewer can recognize that the new reception software should be installed according to the method.

In addition, if the new reception software has been already installed in the step S12, the display to prompt installing of the new reception software is terminated (S14).

Thus, since installing of the new reception software is prompted, which has durability against the illegal actions casing revoke, the present invention has an advantage for the broadcast supplier, and further, if the information for resolving the revoke condition and the applications or the like are added within the new reception software, the viewer is released from the revoke condition. In other words, it is possible to protect a bona fide viewer suffering from revoke without intending the illegal action.

Here, the information and the application or the like for resolving the revoke condition are the newly coded EMM, for example. After supplying the new EMM from the PC section 30 having the new reception software installed therein to the tuner module section 10 and the tuner module section 10 takes in this new EMM therein, the tuner module section 10 makes the program viewable again, namely, the tuner module section 10 is released from the revoke condition.

In the meantime, these pieces of information (the newly coded EMM or the like) as coded may be supplied from a server V via the Internet, for example, through an I/F section 15 of the tuner module 10 or an I/F section 31 of the PC 30 as a part of the new reception software or they are preferably supplied as the information of the CD-ROM read by the PC 30. Here, for the PC section 30, it is more preferable in terms of security that these pieces of information are supplied to the tuner module section 10 as they are coded. In such a case, it is assumed that the key for coding and decoding these pieces of information is written into the tuner module section 10 before manufacturing and shipment.

Thus, it is possible to supply each of the new reception software, the information for resolving the revoke condition (the newly coded EMM or the like), and the application or the like to the broadcasting receiving apparatus effectively, for example, in the form of a package storage medium such as a CD-ROM and a DVD-ROM, the partial data of the broadcasting signal, and the information to be supplied via the Internet or the like.

### <Second revoke processing>

As a modification example of the revoke processing of the broadcasting receiving apparatus according to the present invention, a preferable embodiment for distribution of the new reception software, the information and the application or the like for resolving the revoke condition via the Internet will be described below.

A flow chart of this embodiment is shown in FIG. 6. This flow chart is different from that shown in FIG. 3 in that step S13 is replaced with step S21 and steps S22 and S23 are added.

In other words, a management section 14 determines if a receiving apparatus (tuner module) is revoked or not (S11). Upon this determination, the management section 14 uses the revoke information to be supplied from an RMP processing section 13 shown in FIG. 1 to the management section 14. If the management section 14 determines that the receiving apparatus is not revoked, the management section 14 may loop-process S11, however, if the management section 14 determines that the receiving apparatus is revoked, the management section 14 determines if a new reception software is installed or not (S12).

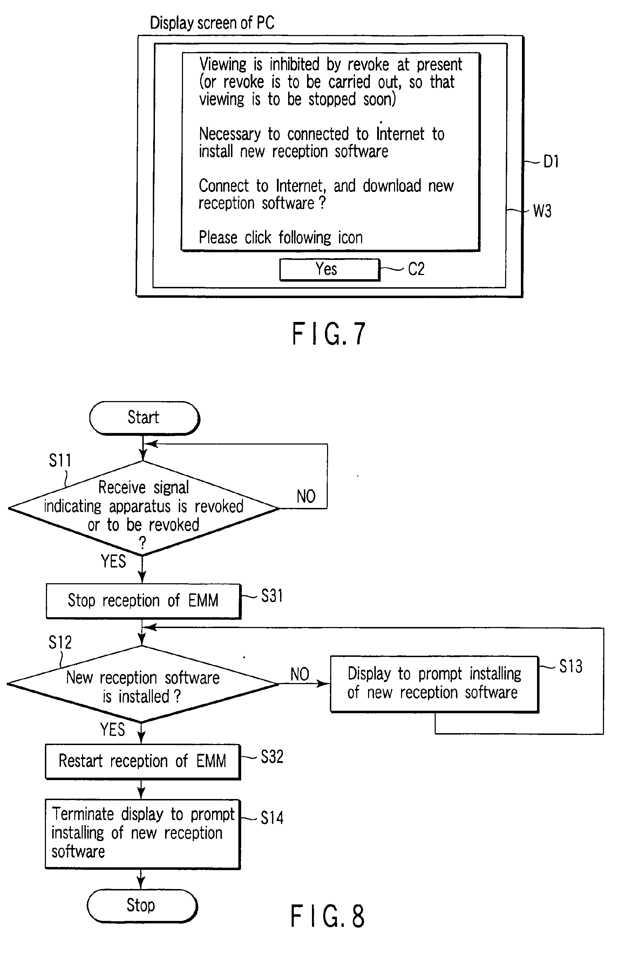

In step S12, when no new reception software is installed, a tuner module section 10 may instruct a PC section 30 to display a message to prompt installing of the new reception software (S13). Here, this display may require the Internet connection in order to obtain the new reception software, and as shown in FIG. 7, for example, it may be a display of a channel viewing of which is inhibited by revoke, an on-screen display W3 for displaying the message superimposed on the black-out TV display screen. For example, an icon C2 indicating "YES" is indicated. In the meantime, a method is not limited to these embodiments as long as the viewer can recognize that the new reception software should be installed and the Internet connection is necessary for this purpose according to the method.

Next, the PC section 30 determines whether or not the user pushes down the "YES" icon indicating the user's intention to approve installing of the reception software and connection to the Internet for this purpose and it may transmit its result to the tuner module section 10, and then, the tuner module section 10 determines to instruct the PC section 30 to display the message (S22). Then, if the PC section 30 determines that the user pushes down the icon, being connected to a predetermined server in order to download the new reception software, the PC section 30 downloads the software and installs this software (S23). If installing is completed, this display is terminated (S14).

In the meantime, the information about a connection destination such as an IP address and URL of the server for downloading the software may be incorporated in the reception software or may be transmitted as the partial data of the broadcasting signal and the reception software extracts this information and uses it. Alternatively, in the case where the connection destination information is incorporated in the reception software in advance, further, not only connecting the PC section 30 to the new reception software but also temporarily connecting it to a portal site guiding the connection destination also including the downloading destination of other information, then, the user may select the connection destination where the new reception software for this PC section 30 is downloaded in accordance with the display of the portal site.

### <Third revoke processing>

As a modification example of the revoke processing of the broadcasting receiving apparatus according to the present invention, a preferable embodiment for distribution of the new reception software, the information and the application or the like for resolving the revoke condition given superimposed on the broadcasting signal will be described below.

A flow chart of this embodiment is shown in FIG. 8. This flow chart is different from that shown in FIG. 3 in that steps S31 and S33 are added. In the flow chart shown in FIG. 8, a management section 14 determines if a receiving apparatus (tuner module) is revoked or not (S11). Upon this determination, the management section 14 uses the revoke information to be supplied from an RMP processing section 13 shown in FIG. 1 to the management section 14. If the management section 14 determines that the receiving apparatus is revoked, the management section 14 stops reception of a new EMM (S31). Here, the new EMM is the information for distributing the information for resolving the revoke condition and the application or the like. Next, by determining if the new reception software is installed or not (S12), if the new reception software is installed, the reception of the new EMM is restarted (S32), and the display to prompt installing is terminated (S14).

Here, the EMM received in the step S32 is the information for resolving the revoke condition. Further, the revoke condition is the condition that only the revoked receiving apparatus cannot accept update of a key Kw by the EMM, and on the other hand, only the receiving apparatus having the ID and the Kmi of the target of revoke cannot view the program since the broadcast station updates the key Kw to be applied for the ECM. In other words, even if the apparatus is revoked once, when the apparatus can accept the update of the key Kw by the EMM, it can view the program again.

On the other hand, in the case where no new reception software is installed in the step S12, the screen prompting installing of the new reception software as shown in FIGS. 4, 5, and 7 may be displayed. Here, it is possible to avoid the case that the apparatus can newly accept the update of the key Kw by the EMM to view the program again with no new reception software for the PC section 30 installed, and after revoking, the reception of the EMM is stopped and the apparatus waits for installing of the new reception software.

Thus, by the EMM information to be superimposed on the broadcasting signal, the revoke processing and releasing it are possible, and particularly, the revoke processing from the side of the broadcast station can be made easily.

In other words, as described above, according to the broadcasting receiving apparatus of the present invention, if the broadcast station knows that the contents are leaked to a specific model of the receiving apparatus in advance, by transmitting the broadcasting signal having a stop signal for each model of the broadcasting receiving apparatus included therein to the broadcasting receiving apparatus, the broadcasting receiving apparatus may detect this stop signal. Then, if the model designated by the signal corresponds to the model of this broadcasting receiving apparatus, it temporally stops the receiving function (namely, revoke).

Further, the broadcasting receiving apparatus may explain the condition to the user by displaying the message indicating that the receiving function of the broadcasting receiving apparatus is stopped at present. In addition, it is also preferable that a function to recover the receiving function from the current revoke condition under a predetermined condition is added by installing the specific program data.

According to above-described various embodiments, a person skilled in the art can realize the present invention, however, it is easy for a person skilled in the art to make various modification examples of them and it is possible to apply the present invention to various embodiments without the inventive capabilities. Accordingly, the present invention covers a wide scope without departing from the disclosed principal and new features and is not limited to the above-described embodiments.

## Claims

1. A broadcasting receiving apparatus **characterized by** comprising:
a tuner section (11) which selects a broadcasting signal and demodulates it to output a demodulated signal;
a processing section (13, 30) which decodes the demodulated signal; and
a control section (14, 30-3) which controls the broadcasting receiving apparatus to detect a stop signal for each model of a broadcasting receiving apparatus included in the broadcasting signal selected by the tuner section, and upon determining that this stop signal corresponds to the broadcasting receiving apparatus, partially interrupts the processing of the tuner section or the processing section in accordance with the detection, and outputs a message signal indicating that a receiving function of this broadcasting receiving apparatus is stopped.

2. The broadcasting receiving apparatus according to claim 1,
**characterized in that** the stop signal is a revoke signal, and the message signal displays that this broadcasting receiving apparatus is in a revoke condition.

3. The broadcasting receiving apparatus according to claim 1,
**characterized in that** the control section, upon detecting the stop signal included in the broadcasting signal selected by the tuner section, partially interrupts the processing of the tuner section or the processing section in accordance with the detection, displays the message indicating that the receiving function of this broadcasting receiving apparatus is stopped and a message to prompt instruction for receiving program data from the outside in order to recover the apparatus from this stopped condition, and receives the program data from the outside in accordance with a user's instruction, and recovers from the stopped condition so as to reproduce a normal broadcasting signal.

4. The broadcasting receiving apparatus according to claim 3,
**characterized in that** the control section receives the program data from the outside via the Internet.

5. The broadcasting receiving apparatus according to claim 1,
**characterized in that** the stop signal is a revoke signal included in an EMM signal included in the broadcasting signal to be extracted from the tuner section.

6. The broadcasting receiving apparatus according to claim 1,
**characterized in that** the stop signal is an EMM signal included in the broadcasting signal, which disables only this broadcasting receiving apparatus when an ID signal of a broadcasting receiving apparatus other than the ID signal of this broadcasting receiving apparatus is updated and the ID signal of this broadcasting receiving apparatus is not updated.

7. The broadcasting receiving apparatus according to claim 1,
**characterized in that** the broadcasting signal received by the tuner section includes at least one of a digital terrestrial broadcasting signal, a BS broadcasting signal, and a CS broadcasting signal.

8. The broadcasting receiving apparatus according to claim 1,
**characterized in that** the tuner section, the processing section, and the control section are functions, which are arranged on a tuner module and a personal computer connected thereto to be dispersed.

9. A broadcasting receiving system comprising a broadcasting transmitting apparatus and a broadcasting receiving apparatus, **characterized by** comprising:
a broadcasting transmitting apparatus (S) which transmits a broadcasting signal and a stop signal for each model of the broadcasting receiving apparatus to be superimposed on the broadcasting signal; and
a broadcasting receiving apparatus having a tuner section (11) which selects a broadcasting signal from the broadcasting transmitting apparatus and demodulates it to output a demodulated signal; a processing section (13, 30) which decodes the demodulated signal; and a control section (14, 30-3) which controls the broadcasting receiving apparatus to detect a stop signal for each model of a broadcasting receiving apparatus included in the broadcasting signal selected by the tuner section, and upon determining that this stop signal corresponds to the broadcasting receiving apparatus, partially interrupts the processing of the tuner section or the processing section in accordance with the detection, and outputs a message signal indicating that a receiving function of this broadcasting receiving apparatus is stopped.

10. The broadcasting receiving system according to claim 9,
**characterized in that** the stop signal is a revoke signal, and the message signal displays that this broadcasting receiving apparatus is in a revoke condition.

11. The broadcasting receiving system according to claim 9,
**characterized in that** the control section, upon detecting the stop signal included in the broadcasting signal selected by the tuner section, partially interrupts the processing of the tuner section or the processing section in accordance with the detection, displays the message indicating that the receiving function of this broadcasting receiving apparatus is stopped and a message to prompt instruction for receiving program data from the outside in order to recover the apparatus from this stopped condition, and receives the program data from the outside in accordance with a user's instruction, and recovers from the stopped condition so as to reproduce a normal broadcasting signal.

12. The broadcasting receiving system according to claim 11,
**characterized in that** the control section receives the program data from the outside via the Internet.

13. The broadcasting receiving system according to claim 9,
**characterized in that** the stop signal is a revoke signal included in an EMM signal included in the broadcasting signal to be extracted from the tuner section.

14. The broadcasting receiving system according to claim 9,
**characterized in that** the stop signal is an EMM signal included in the broadcasting signal, which disables only this broadcasting receiving apparatus when an ID signal of a broadcasting receiving apparatus other than the ID signal of this broadcasting receiving apparatus is updated and the ID signal of this broadcasting receiving apparatus is not updated.

15. The broadcasting receiving system according to claim 9,
**characterized in that** the broadcasting signal received by the tuner section includes at least one of a digital terrestrial broadcasting signal, a BS broadcasting signal, and a CS broadcasting signal.

16. The broadcasting receiving system according to claim 9,
**characterized in that** the tuner section, the processing section, and the control section are functions, which are arranged on a tuner module and a personal computer connected thereto to be dispersed.

17. A broadcasting receiving method, **characterized by** comprising:
selecting a broadcasting signal and demodulating it to output a demodulated signal;
decoding the demodulated signal; and
when detecting a stop signal included in the selected broadcasting signal, partially interrupting the processing of demodulation or decoding in accordance with the detection, and outputting a message signal indicating that a receiving function of a broadcasting receiving apparatus in current use is stopped.

18. The broadcasting receiving method according to claim 17,
**characterized in that** the stop signal is a revoke signal, and the message signal displays that this broadcasting receiving apparatus is in a revoke condition.

19. The broadcasting receiving method according to claim 17,
**characterized in that** the method comprises, upon detecting the stop signal included in the selected broadcasting signal, partially interrupting the processing of demodulation or decoding in accordance with the detection, and outputting a message signal indicating that a receiving function of a broadcasting receiving apparatus in current use is stopped and a message to prompt instruction for receiving program data from the outside in order to recover the apparatus from this stopped condition, and receiving the program data from the outside in accordance with a user's instruction, and recovering from the stopped condition so as to reproduce a normal broadcasting signal.

20. The broadcasting receiving method according to claim 19,
**characterized in that** the method comprises receiving the program data from the outside via the Internet.
